(19) Europäisches Patentamt
European Patent Office
Office européen des brevets

(11) EP 4 592 871 A1

(12) EUROPEAN PATENT APPLICATION

(43) Date of publication:
30.07.2025 Bulletin 2025/31

(51) International Patent Classification (IPC):
G06F 16/906 (2019.01)   G06N 3/08 (2023.01)

(21) Application number: 24186911.4

(22) Date of filing: 05.07.2024

(52) Cooperative Patent Classification (CPC):
G06F 16/906; G06F 16/9024; G06N 3/045;
G06N 3/08; G06N 7/01

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 23.01.2024 KR 20240010364

(71) Applicant: Seoul National University R&DB
Foundation
Seoul 08826 (KR)

(72) Inventors:
• KANG, U
  Seoul 08826 (KR)
• KIM, Junghun
  Seoul 08826 (KR)
• PARK, Kahyun
  Seoul 08826 (KR)
• YOON, Hoyoung
  Seoul 08826 (KR)

(74) Representative: Isarpatent
Patent- und Rechtsanwälte
Barth Hassa Peckmann & Partner mbB
Friedrichstraße 31
80801 München (DE)

(54) LINK PREDICTION METHOD AND APPARATUS USING ACCURATE LINK PREDICTION MODEL BASED ON POSITIVE-UNLABELED DATA LEARNING

(57) Proposed herein are a link prediction method and apparatus. The link prediction method that is performed by the link prediction apparatus includes predicting one or more edges having a probability of being connected in the structure of an edge-incomplete graph by entering the edge-incomplete graph into a link prediction model. The link prediction model is a model that performs binary classification by processing at least one edge observed in the structure of the edge-incomplete graph as positive data and processing at least one node pair unconnected in the structure of the edge-incomplete graph as unlabeled data.

FIG. 2

EP 4 592 871 A1

**Description**

BACKGROUND

1. Technical Field

The embodiments disclosed herein relate to a link prediction method and apparatus, and more particularly to a method and device for training and utilizing a link prediction model that accurately predicts one or more edges having a probability of being connected in the future in an edge-incomplete graph.

The embodiments disclosed herein were derived as a result of the research on the task "XVoice: Multi-Modal Voice Meta Learning" (Task management number: IITP-2022-0-00641) of the Human-centered Artificial Intelligence Fundamental Technology Development Project, the task "Flexible and Efficient Model Compression Method for Various Applications and Environments" (Task management number: IITP-2020-0-00894) of the Software Computing Industry Fundamental Technology Development Project, and the task "Artificial Intelligence Graduate School Program (Seoul National University)" (Task management number: IITP-2021-0-01343) and task "Artificial Intelligence Innovation Hub" (Task management number: IITP-2021-0-02068) of the Information, Communications and Broadcasting Innovative Talent Nurturing Project that were sponsored by the Korean Ministry of Science and ICT and the Institute of Information & Communications Technology Planning & Evaluation.

2. Description of the Related Art

Edge-incomplete graphs are easily encountered in the real world. Examples of edge-incomplete graphs include friend relationships in social networks and citation relationships in papers. In social networks, users are nodes, and the friend relationships between users are edges. Users do not check all users when adding friends in social networks, so that relationships that are friends in the real world but are not connected as friends may be included in the social networks. In paper citation networks, papers are nodes, and the citation relationships between papers are edges. Users do not check all published papers when citing papers, so that papers that should be cited may be omitted.

Conventional techniques for predicting edges in an edge-incomplete graph have a disadvantage in that they rely strongly on a given edge-incomplete graph. The conventional techniques presume that the edges of the given graph are fully-observed ones, and do not take into consideration unobserved missing edges during training. Although this can form edges, it makes it impossible to propagate information between unconnected nodes in the given graph, thereby overfitting a link prediction model to the given edge-incomplete graph.

Therefore, there is a demand for link prediction technology that takes into consideration unconnected nodes in an edge-incomplete graph.

For reference, Korean Patent Application Publication No. 10-2023-0083925 discloses an invention regarding an apparatus and method for predicting features of nodes. This patent publication only discloses technology for predicting nodes of a graph, but does not provide a link prediction technology that takes into consideration unconnected nodes in a graph.

SUMMARY

An object of the embodiments disclosed herein is to accurately predict one or more edges having a probability of being connected in the structure of an edge-incomplete graph by using a link prediction model that processes one or more edges observed in the structure of the edge-incomplete graph as positive data and processes one or more node pairs unconnected in the structure of the edge-incomplete graph as unlabeled data.

Other objects and advantages of the present invention can be understood from the following description and will be more clearly understood by means of the embodiments. Furthermore, it will be readily apparent that the objects and advantages of the present invention can be embodied by the technical solutions described in the attached claims and combinations thereof.

As a technical solution for accomplishing the above-described object, there is provided a link prediction method, the link prediction method being performed by a link prediction apparatus, the link prediction method including: predicting one or more edges having a probability of being connected in the structure of an edge-incomplete graph by entering the edge-incomplete graph into a link prediction model; wherein the link prediction model is a model that performs binary classification by processing at least one edge observed in the structure of the edge-incomplete graph as positive data and processing at least one node pair unconnected in the structure of the edge-incomplete graph as unlabeled data.

According to another embodiment, there is provided a link prediction apparatus including: memory configured to store an edge-incomplete graph and a link prediction model; and a controller configured to predict one or more edges having a probability of being connected in the structure of the edge-incomplete graph by entering the edge-incomplete graph into the link prediction model; wherein the link prediction model is a model that performs binary classification by processing at least one edge observed in the structure of the edge-incomplete graph as positive data and processing at least one node pair unconnected in the structure of the edge-incomplete graph as unlabeled data.

According to still another embodiment, there is provided a non-transitory computer-readable storage medium having stored thereon a program that, when executed by a processor, causes the processor to execute the link prediction method.

According to still another embodiment, there is provided a computer program that is executed by a link prediction apparatus and stored in a non-transitory computer-readable storage medium to perform the link prediction method.

BRIEF DESCRIPTION OF THE DRAWINGS

The accompanying drawings illustrate the embodiments disclosed in the present specification, and serve to help the further understanding of the technical spirit disclosed in the present specification along with specific details for carrying out the invention. The content disclosed in the present specification should not be construed as limited to the items described in the drawings:

FIG. 1 is a block diagram illustrating the functional configuration of a link prediction apparatus according to an embodiment;
FIG. 2 is a diagram illustrating a graph converted by the link prediction apparatus according to the embodiment;
FIG. 3 is a flowchart illustrating a process in which the link prediction apparatus according to the embodiment trains a link prediction model;
FIG. 4 is a flowchart illustrating a link prediction method according to an embodiment; and
FIGS. 5 to 7 are diagrams illustrating the link prediction performance simulated according to embodiments.

DETAILED DESCRIPTION

Various embodiments will be described in detail below with reference to the accompanying drawings. The following embodiments may be modified and practiced in various different forms. In order to more clearly illustrate features of the embodiments, detailed descriptions of items that are well known to those having ordinary skill in the art to which the following embodiments pertain will be omitted. Furthermore, in the drawings, portions unrelated to descriptions of the embodiments will be omitted. Throughout the specification, like reference symbols will be assigned to like portions.

Throughout the specification, when one component is described as being "connected" to another component, this includes not only a case where the one component is "directly connected" to the other component but also a case where the one component is "connected to the other component with a third component disposed therebetween." Furthermore, when one component is described as "including" another component, this does not mean that the one component does not exclude a third component but means that the one component may further include a third component, unless explicitly described to the contrary.

Embodiments will be described in detail below with reference to the accompanying drawings.

The term "graph" refers to a data structure in which nodes and edges (links) connecting nodes are collected. Each node has a feature vector that represents features of the corresponding node. Data in the form of a graph may be observed in a variety of manners in the real world. For example, the relationships between users may be represented by data in the form of a graph in social network services such as Facebook or Twitter, streaming services such as Wave or Netflix, and shopping websites such as Coupang or Gmarket. Furthermore, in the field of chemistry in which features of compounds such as medicines or proteins are identified and classified, data may be represented in the form of a graph. However, in the real world, due to realistic limitations of not being able to check all pieces of data, there are cases where some edges are missing. A graph in which one or more edges are missing is called an edge-incomplete graph.

Table 1 below defines the terms used in the present specification.

Table 1

| Symbol | Description |
|---|---|
| $\mathcal{G}_\mathcal{P} = (\mathcal{V}, \mathcal{E}_\mathcal{P})$ | Edge-incomplete graph with sets $\mathcal{V}$ of nodes and $\mathcal{E}_\mathcal{P}$ of observed edges |
| $\mathcal{E}_\mathcal{U}$ | Set of unconnected node pairs (unconnected edges) |
| $e_{ij}$ | Edge between nodes $i$ and $j$ |
| $L(\mathcal{G})$ | Corresponding line graph of |

3

(continued)

| Symbol | Description |
|---|---|
| $A^{\mathcal{G}}$ | Corresponding adjacency matrix of $\mathcal{G} = (\mathcal{V}, \mathcal{E})$ where $\overline{A}^{\mathcal{G}}_{ij} = 1$ if $e_{ij} \in \varepsilon$ |
| X | Feature matrix for every node in $\mathcal{GP}$ |
| $f_{\theta}(\cdot, \cdot)$ | Link predictor parameterized by $\theta$ |
| $\mathcal{L}(\cdot)$ | Objective function that PULL aims to minimize |
| $\bar{\mathcal{G}}$ | Expected graph structure |
| $\bar{\mathcal{G}}'$ $\bar{\mathcal{G}}$ | Approximated version of |

In the present specification, $\mathcal{GP}$ refers to an edge-incomplete graph having nodes $\mathcal{V}$ and observed edges (or links) $\mathcal{E_P}$ and may also be referred to as $\mathcal{G}$. $\mathcal{E}_u$ denotes an unconnected node pair (unconnected edges), $e_{ij}$ denotes an edge between nodes i and j, and L( $\mathcal{G}$ ) denotes a line graph corresponding to an edge-incomplete graph $\mathcal{G}$. $A^{\mathcal{G}}$ denotes an adjacency matrix corresponding to the edge-incomplete graph $\mathcal{G}$, and $X$ denotes a feature matrix for all nodes in the edge-incomplete graph $\mathcal{GP}$. $f_{\theta}$ denotes a link prediction model having a parameter $\theta$. $\mathcal{L}(\cdot)$ denotes an objective function to be minimized during a model training process, and may also be called a loss function. $\bar{\mathcal{G}}$ denotes an expected edge-incomplete graph to which random variables are applied, and $\bar{\mathcal{G}}'$ denotes an approximated expected edge-incomplete graph.

In the present embodiment, a link prediction model based on positive-unlabeled data learning is trained, and one or more edges having a probability of being connected in an edge-incomplete graph are accurately predicted. Positive-unlabeled data learning is a type of binary classification. While the traditional binary classification problem aims to train a binary classification model by utilizing positive and negative training data instances, positive-unlabeled data learning aims to train a classification model by utilizing positive-unlabeled training data instances. In other words, positive-unlabeled data learning aims to train a binary classification model when only part of the data is labeled as positive and the rest is given as unlabeled during a model training process. Positive labeling refers to classifying the degree to which the correct answer (the actual value) matches the expected value (sameness or similarity). Negative labeling means classifying the degree to which the incorrect value matches the expected value (sameness or similarity). The sameness or similarity may be measured based on various distances between values. In positive-unlabeled data learning, the conventional binary classification model may not be applied without change because the learning instances classified as negative are not given during a model training process.

In the present embodiment, the observed edges of a given edge-incomplete graph are considered positive data instances, and the remaining unconnected node pairs (node pairs that may be connected in the future) are processed as unlabeled data instances. Through this, unconnected node pairs in the given graph may be utilized during a training process in a connected or unconnected state. In particular, in the present embodiment, random variables representing connection relationships between unconnected node pairs are introduced, and then expectations for a graph are utilized to train a link prediction model instead of the given graph, so that accuracy and efficiency according to positive-unlabeled data learning are improved.

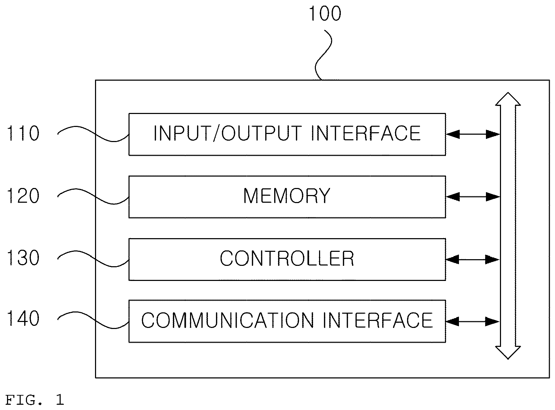

FIG. 1 is a block diagram illustrating the functional configuration of a link prediction apparatus 100 according to an embodiment.

Referring to FIG. 1, the link prediction apparatus 100 according to the present embodiment may include an input/output interface 110, memory 120, a controller 130, and a communication interface 140.

The input/output interface 110 may include an input interface configured to receive input from a user and an output interface configured to display information such as the results of performance of a task or the status of the link prediction apparatus 100. In other words, the input/output interface 110 is configured to receive input data and output the results of computational processing of the data. The link prediction apparatus 100 according to the present embodiment may receive a link prediction request and the like through the input/output interface 110.

The memory 120 is configured to store files and a program, and may be constructed using various types of memory. In particular, the memory 120 may store data and a program that enable the controller 130 to perform computation for link prediction according to an algorithm, which will be presented below.

The memory 120 may store an edge-incomplete graph and a link prediction model. The memory 120 may store an expected edge-incomplete graph and an approximated expected edge-incomplete graph. The memory 120 may store a prediction probability output by the link prediction model.

The controller 130 is a component including at least one processor such as a central processing unit (CPU) or a graphics processing unit (GPU), and may control the overall operation of the link prediction apparatus 100. That is, the controller 130 may control other components included in the link prediction apparatus 100 to perform operation for link prediction. The controller 130 may perform an operation for predicting one or more edges from an edge-incomplete graph according to the algorithm to be presented below by executing the program stored in the memory 120.

The communication interface 140 may perform wired or wireless communication with other devices or a network. For example, when a server providing the service of a specific online platform that collects or processes data included in graphs is implemented as a separate device, the communication interface 140 may receive an edge-incomplete graph through communication with the server providing the service of the online platform, and may provide one or more edges, generated according to a prediction probability based on the received edge-incomplete graph or an edge-incomplete graph supplemented with one or more edges, to the server or a user terminal.

To this end, the communication interface 140 may include a communication module supporting at least one of various wired/wireless communication methods, and the communication module may be implemented in the form of a chipset. The mobile communication or wireless communication supported by the communication interface 140 includes, e.g., an n-th generation mobile communication protocol, Wireless Fidelity (Wi-Fi), Wi-Fi Direct, Bluetooth, Ultra-Wide Band (UWB), or Near Field Communication (NFC).

The controller 130 may predict one or more edges having a probability of being connected in the structure of an edge-incomplete graph by entering the edge-incomplete graph into a link prediction model. A model based on a graph convolutional network may be applied to the link prediction model, or another learning model capable of graph processing may be applied thereto.

The controller 130 may perform the binary classification of the configuration of a graph or classify one or more unconnected node pairs by processing one or more edge observed in the structure of the edge-incomplete graph as positive data and processing one or more node pairs unconnected in the structure of the edge-incomplete graph as unlabeled data through the link prediction model.

The controller 130 improves the link prediction accuracy and processing efficiency of the link prediction model by converting the edge-incomplete graph into another graph.

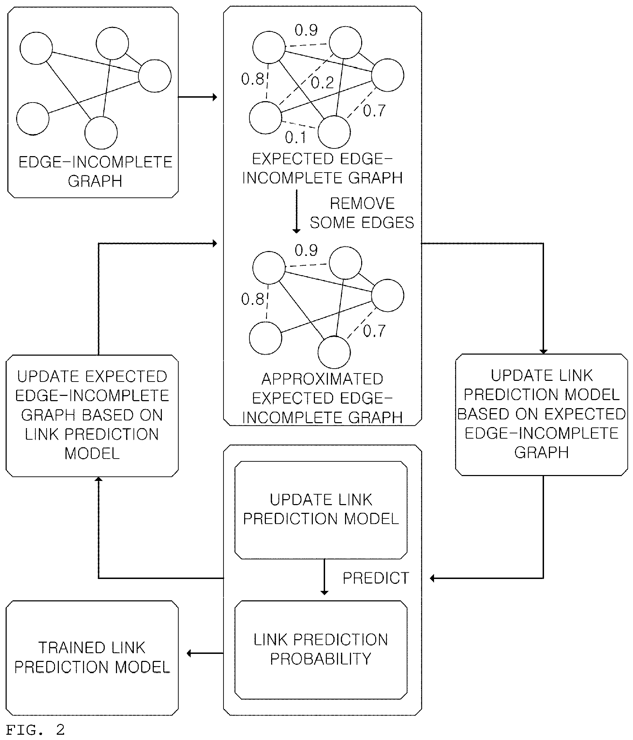

FIG. 2 is a diagram illustrating a graph converted by the link prediction apparatus according to the embodiment.

Referring to FIG. 2, the controller 130 may convert an edge-incomplete graph into an expected edge-incomplete graph. In this case, the expected edge-incomplete graph is a graph to which random variables representing the connection states of one or more unconnected node pairs in the structure of the edge-incomplete graph are applied.

The controller 130 converts the edge-incomplete graph into a line graph in which two adjacent edges in the structure of the edge-incomplete graph are represented by two connected nodes, and may compute expectations for the random variables using a Markov network obtained by modeling the joint probability distribution of the nodes of the resulting line graph.

The controller 130 may convert the expected edge-incomplete graph into an approximated expected edge-incomplete graph by approximating the structure of the expected edge-incomplete graph in such a manner as to set the number of edges to be maintained within the structure of the expected edge-incomplete graph and not connect the remaining node pairs except those having a higher probability of being connected than a reference value.

In the process of training the link prediction model, the controller 130 may perform training by propagating information in the graph convolutional network of the link prediction model using the expected edge-incomplete graph (or the approximated expected edge-incomplete graph).

In the process of training the link prediction model, the controller 130 may update the parameter of the link prediction model by using the expected edge-incomplete graph (or the approximated expected edge-incomplete graph) to which random variables representing the connection states of one or more unconnected node pairs are applied in the structure of the edge-incomplete graph through the link prediction model.

In the process of training the link prediction model, the controller 130 may update the random variables of the expected edge-incomplete graph (or the approximated expected edge-incomplete graph) by using a prediction probability output by the link prediction model.

In the process of training the link prediction model, the controller 130 may train the link prediction model according to a dual loss function to which one or more randomly sampled edges are applied in order to strike a balance between the number of connected edges and the number of unconnected edges in the structure of the edge-incomplete graph by taking into consideration one or more added edges in the expected edge-incomplete graph (or the approximated expected edge-incomplete graph).

In the process of training the link prediction model, the controller 130 may train the link prediction model according to a correction loss function that prevents excessive self-reinforcement based on one or more randomly sampled edges by taking into consideration one or more added edges in the expected edge-incomplete graph (or the approximated expected edge-incomplete graph).

The controller 130 may predict one or more edges by using the link prediction model optimized to minimize the dual loss function and the correction loss function.

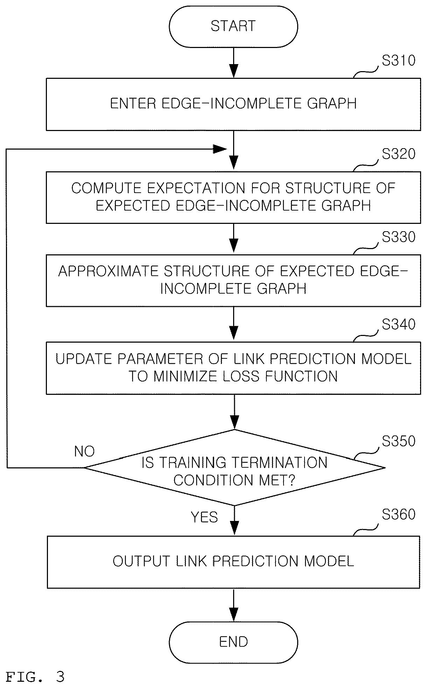

FIG. 3 is a flowchart illustrating a process in which the link prediction apparatus according to the embodiment trains a link prediction model.

Referring to FIG. 3, in step S310, the link prediction apparatus receives an edge-incomplete graph $\mathcal{G}$ .

The link prediction apparatus trains a link prediction model $f_\theta$ using the edge-incomplete graph $\mathcal{G}$ and then sets it as an initial model. In this case, $\theta$ is the trainable parameter of the link prediction model.

All the edges $e_{ij}$ of the edge-incomplete graph $\mathcal{G}$ are stochastically connected, so that information cannot be propagated through the variable graph $\mathcal{G}$ during the training of the link prediction model.

The link prediction apparatus enables the propagation of information between unconnected node pairs by using an expected edge-incomplete graph $\bar{\mathcal{G}}$ , in which random variables are applied between the unconnected node pairs in the edge-incomplete graph, in the process of training the link prediction model. This allows the link prediction model to be accurately trained by taking into consideration the hidden connections of $\mathcal{E}_u$ .

The link prediction model provides prior knowledge for constructing the expected link-incomplete graph, so that an improved link prediction model can improve the quality of the expected edge-incomplete graph $\bar{\mathcal{G}}$ . Furthermore, the link prediction apparatus may improve the quality of the expected edge-incomplete graph $\bar{\mathcal{G}}$ in a subsequent step by repeating the process of updating the parameter of the link prediction model using the random variables of the expected edge-incomplete graph and the process of updating the random variables of the expected edge-incomplete graph using a prediction probability output by the link prediction model.

In step S320, the link prediction apparatus converts the edge-incomplete graph into the expected edge-incomplete graph and computes an expectation for the structure of the expected edge-incomplete graph.

Given the edge-incomplete graph $\mathcal{G}$ and the trained link prediction model $f_\theta$, there are introduced random variables $z_{ij}$ that represent the connection and disconnection of unconnected node pairs (i,j). In other words, when a set of all unconnected node pairs in a given graph $\mathcal{G}$ is $\mathcal{E}_u$ , random variables $z_{ij}$ are introduced for the unconnected node pairs in $\mathcal{G}$ . When $z_{ij} = 1$, it means that nodes i and j are connected to each other; when $z_{ij} = 0$, it means that nodes i and j are disconnected from each other.

In this case, the type of graph structure possible is $2^{|\mathcal{E}_u|}$ , which is not easy to compute because the amount of computation thereof is excessively large.

Therefore, in the present embodiment, expectations for the random variables of an expected edge-incomplete graph may be efficiently computed by converting an edge-incomplete graph into a line graph and assuming a Markov network. The line graph is a converted graph in which the edges of an original graph become nodes and, when two edges of the original graph are connected to the same node, the corresponding two nodes of the line graph are connected. In the Markov network, the joint probability distribution of nodes may be modeled using the Markov property.

In the present embodiment, the joint probability distribution of edges in the given graph is obtained using the property, and then the expected edge-incomplete graph $\bar{\mathcal{G}}$ , which is an expectation for a graph structure for the random variable z, is computed.

The expected edge-incomplete graph $\bar{\mathcal{G}}$ may be represented by an adjacency matrix A^. The (i,j)-th element $A_{ij}^{\bar{\mathcal{G}}}$ of the adjacency matrix $A^{\bar{\mathcal{G}}}$ is represented by 1 when two nodes i and j are connected, and 0 when they are not connected. The dimension of the (i,j)-th element $A_{ij}^{\bar{\mathcal{G}}}$ of the adjacency matrix $A^{\bar{\mathcal{G}}}$ may be represented by the product of the number of nodes.

The (i,j)-th element $A_{ij}^{\bar{\mathcal{G}}}$ of the adjacency matrix $A^{\bar{\mathcal{G}}}$ for the expected edge-incomplete graph may be represented by Equation 1 and Equation 2 below:

$$A_{ij}^{\bar{\mathcal{G}}} = \phi_{ij}(z_{ij} = 1|\theta) \sum_{z|z_{ij}=1} \prod_{e_{kl} \in \mathcal{E}_u \backslash \{e_{ij}\}} \phi_{kl}(z_{kl}|\theta) A(z)_{ij}$$

$$= \phi_{ij}(z_{ij} = 1|\theta) \tag{1}$$

$$\phi_{ij}(z_{ij} = 1|\theta) = \begin{cases} 1 & \text{if } e_{ij} \in \mathcal{E}_{\mathcal{P}} \\ f_\theta(i,j) = \mathrm{sigmoid}(h_i \cdot h_j) & \text{otherwise} \end{cases} \tag{2}$$

The node potential $\phi_{ij}$ may be represented by an unnormalized marginal linking probability between nodes i and j in an original graph $\mathcal{G}_{\mathcal{P}}$. In order to ensure that the nodes of $\mathcal{G}_{\mathcal{P}}$ having a similar hidden expression have a higher linking probability, the node potential $\phi_{ij}$ of the line graph $L(\mathcal{G})$ may be defined as Equation 2. $\mathcal{E}_{\mathcal{P}}$

is a set of observed edges of the given graph $\mathcal{G}_{\mathcal{P}}$, and $h_i$ is an embedding for the node i obtained based on a graph convolutional network (GCN).
In step S330, the link prediction apparatus approximates the expected edge-incomplete graph structure.

The link prediction apparatus approximates the expected edge-incomplete graph $\bar{\mathcal{G}}$ to $\bar{\mathcal{G}}'$ in order to overcome computational complexity.

Since the (i,j)-th element $A_{ij}^{\bar{\mathcal{G}}}$ of the adjacency matrix $A^{\bar{\mathcal{G}}}$ is a value based on a sigmoid function or 1 in Equation 2, all values are 0 or more. Accordingly, in each repetition stage, the number K of edges in the graph is set and the remaining node pairs except for the K node pairs having the highest probability of being connected (K node pairs having the highest $f_{\theta(i,j)}$ value) are not connected. In this case, the repetition stage means performing steps S320 and S330 once. As the repetition stage progresses, the link prediction apparatus increases the number K of edges in the graph in proportion to the number of edges observed in the given edge-incomplete graph.
In such a manner as to approximate the structure of the expected edge-incomplete graph, the oversmoothing problem may be overcome, and the training time problem in which training time increases depending on the number of nodes may be overcome.
The expected edge-incomplete graph may be efficiently approximated in such a manner as to select candidate edges based on the degrees of nodes in the structure of the expected edge-incomplete graph, select edges having high weights based on random variables from the candidate edges, and remove the remaining edges.
In step S340, the link prediction apparatus updates the parameter of the link prediction model to minimize the loss function.

The link prediction apparatus propagates information through the expected edge-incomplete graph $\bar{\mathcal{G}}$ instead of the given graph $\mathcal{G}$ and updates the link prediction model while using labels.
In $f_{\theta(i,j)} = \mathrm{sigmoid}(h_i, h_j)$ $h_i$ corresponds to a node embedding based on a graph convolutional network, so that it is possible to perform training while propagating information through the graph structure. When computing $h_i$, the link prediction apparatus may propagate information through the approximated expected edge-incomplete graph $\bar{\mathcal{G}}'$ rather than the given graph structure $\mathcal{G}$.
The quality of the link prediction model and the quality of the expected edge-incomplete graph (or the approximated expected edge-incomplete graph) may be mutually and gradually improved by repeating the process of updating the parameter of the link prediction model by using the random variables of the expected edge-incomplete graph (or the approximated expected edge-incomplete graph) and updating the random variables of the expected edge-incomplete graph (or the approximated expected edge-incomplete graph) by using a prediction probability output by the link prediction model.

The link prediction apparatus minimizes the sum of two loss functions to train the link prediction model $f_{\theta(i,j)}$. The dual loss function for positive data and unlabeled data is a loss function obtained by sampling edges to resolve the imbalance in the number of edges in an actual graph and striking a balance, and may be represented by Equation 3 below. To solve the problem in which, when the current parameter of the link prediction model is not accurate, the quality of the expected edge-incomplete graph deteriorates and thus the parameter becomes inaccurate in a subsequent repetition stage, the correction loss function that measures binary cross-entropy for edges may be represented by Equation 4 below. The sum of the dual loss function and the correction loss function may be represented by Equation 5 below:

$$\mathcal{L}'_E = -\sum_{e_{ij}\in\mathcal{E}_\mathcal{P}}\log\hat{y}_{ij} - \sum_{e_{ij}\in\mathcal{E}'_u}\log(1-\hat{y}_{ij})$$

$$-\sum_{e_{ij}\in\mathcal{E}^r_\mathcal{P}}(A^{\bar{\mathcal{G}}'}_{ij}\log\hat{y}_{ij} + (1-A^{\bar{\mathcal{G}}'}_{ij})\log(1-\hat{y}_{ij})) \qquad (3)$$

$$\mathcal{L}_C = -\sum_{e_{ij}\in\mathcal{E}_\mathcal{P}}\log\tilde{y}_{ij} - \sum_{e_{kl}\in\mathcal{E}''_u}\log(1-\tilde{y}_{ij}) \qquad (4)$$

$$\mathcal{L}(\theta^{\text{new}};\ \bar{\mathcal{G}}',X) = \mathcal{L}'_E + \mathcal{L}_C \qquad (5)$$

In this case, $\mathcal{E}_\mathcal{P}$ and $\mathcal{E}_u$ are sets of node pairs that are not connected to the edge set of the given graph, respectively. $\mathcal{E}^r_\mathcal{P}$ is a set of newly connected edges among $\mathcal{E}_u$ when $\bar{\mathcal{G}}'$ is generated, and $\mathcal{E}^r_u$ is $\mathcal{E}_u \setminus \mathcal{E}^r_\mathcal{P}$.

$\mathcal{E}'_u$ and $\mathcal{E}''_u$ are edge sets generated by randomly sampling edges as many as $|\mathcal{E}_\mathcal{P} \cup \mathcal{E}^r_\mathcal{P}|$ and $|\mathcal{E}_\mathcal{P}|$, respectively, from $\mathcal{E}_u$.

In the process of training the link prediction model, the link prediction apparatus may improve the accuracy of the link prediction model based on the dual loss function by striking a balance between the number of connected edges and the number of unconnected edges in the structure of the edge-incomplete graph by taking into consideration one or more newly added edges in the expected edge-incomplete graph and applying randomly sampled edges.

In the process of training the link prediction model, the link prediction apparatus may improve the accuracy of the link prediction model by taking into consideration one or more newly added edges in the expected edge-incomplete graph and preventing excessive self-reinforcement through a correction loss function to which randomly sampled edges are applied.

In step S350, the link prediction apparatus determines whether a training termination condition is met. The training of the model is stopped when the model converges or the maximum number of iterations is reached. When the training termination condition is not met, steps S320 to S340 are repeated. When the training termination condition is met, the trained link prediction model is output in step S360.

The algorithm for link prediction described with reference to FIG. 3 may be written in pseudo-code, as shown in Table 2.

Table 2

| **Algorithm 1:** Overall process of PULL. |
|---|
| **In-put** : Edge-incomplete graph $\mathcal{G}_\mathcal{P} = (\mathcal{V}, \mathcal{E}_\mathcal{P})$ , feature matrix X, set $\mathcal{E}_u$ of unconnected edges, hyperparameter *r*, and link predictor $f_\theta(i, j)$ parameterized by $\theta$ |
| **Output** : Best parameters $\theta$ of link predictor $f_\theta(i, j)$ |
| 1    Randomly initialize $\theta^{\text{new}}$ , and initialize *K* as $|\mathcal{E}_\mathcal{P}|$; |
| 2    **repeat** |
| 3      $\theta \leftarrow \theta^{\text{new}}$; |

(continued)

**Algorithm 1:** Overall process of PULL.

| 4 | $\bar{\mathcal{G}} \leftarrow \mathbb{E}_{z \sim p(z \mid X, \mathcal{E}_\mathcal{P}, \theta)} \left[ A(z) \right] = A^{\bar{\mathcal{G}}}$ ; |
|---|---|
| 5 | Approximate $\bar{\mathcal{G}}$ to $\bar{\mathcal{G}}'$ by keeping edges with high confidence, while removing the rest; |
| 6 | $K \leftarrow K + \mid \mathcal{E}_\mathcal{P} \mid * r$ ; |
| 7 | $\theta^{new} \leftarrow \arg \min_\theta \mathcal{L} (\theta; \bar{\mathcal{G}}', X)$; |
| 8 | **until** *the maximum number of iterations is reached or the early stopping condition is met*; |

This algorithm for link prediction may be referred to as "PU-Learning-based Link predictor (PULL)."

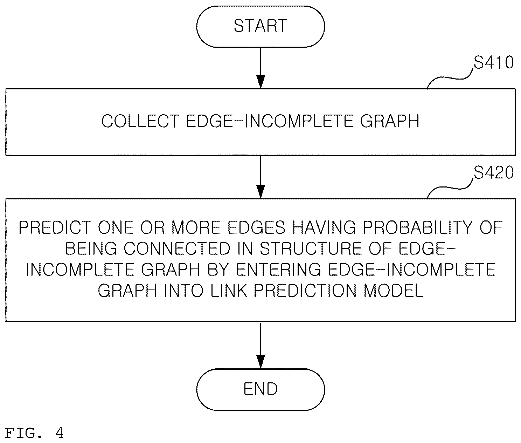

FIG. 4 is a flowchart illustrating a link prediction method according to an embodiment.

The link prediction method according to the embodiment shown in FIG. 4 includes the steps that are processed in a time-series manner by the link prediction apparatus shown in FIGS. 1 to 3. Accordingly, the descriptions that are omitted below but have been given above in conjunction with the link prediction apparatus shown in FIGS. 1 to 3 may also be applied to the link prediction method according to the embodiment shown in FIG. 4.

Referring to FIG. 4, in step S410, the link prediction apparatus collects an edge-incomplete graph.

In step S420, the link prediction apparatus predicts one or more edges having a probability of being connected in the structure of the edge-incomplete graph by entering the edge-incomplete graph into a link prediction model.

The link prediction model applied to the link prediction method may be a model that performs binary classification by processing one or more edge observed in the structure of the edge-incomplete graph as positive data and processing one or more node pairs unconnected in the structure of the edge-incomplete graph as unlabeled data.

The link prediction model applied to the link prediction method may be a model in which the parameter of the link prediction model is updated using an expected edge-incomplete graph to which random variables representing the connection states of unconnected node pairs in the structure of the edge-incomplete graph are applied.

The link prediction model applied to the link prediction method may be a model in which the edge-incomplete graph is converted into a line graph in which two adjacent edges in the structure of the edge-incomplete graph are represented by two connected nodes and expectations for the random variables are computed using a Markov network obtained by modeling the joint probability distribution of the nodes of the resulting line graph.

The link prediction model applied to the link prediction method may be a model in which the structure of the expected edge-incomplete graph is approximated in such a manner as to set the number of edges to be maintained within the structure of the expected edge-incomplete graph and not connect the remaining node pairs except those having a higher probability of being connected than a reference value.

The link prediction model applied to the link prediction method may be a model that is trained through the propagation of information in the graph convolutional network of the link prediction model using the expected edge-incomplete graph.

The link prediction model applied to the link prediction method may be a model in which the random variables of the expected edge-incomplete graph are updated using a prediction probability output by the link prediction model.

The link prediction model applied to the link prediction method may be a model that is trained according to a dual loss function to which randomly sampled edges are applied in order to strike a balance between the number of connected edges and the number of unconnected edges in the structure of the edge-incomplete graph by taking into consideration added edges in the expected edge-incomplete graph.

The link prediction model applied to the link prediction method may be a model that is trained according to a correction loss function that prevents excessive self-reinforcement based on randomly sampled edges by taking into consideration added edges in the expected edge-incomplete graph.

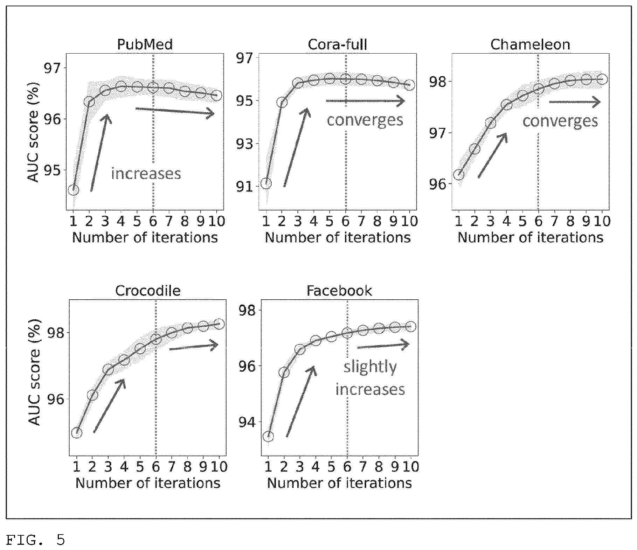

FIGS. 5 to 7 are diagrams illustrating the link prediction performance simulated according to embodiments.

As a result of comparing the performance of PULL, which is a present embodiment, with those of conventional models for a total of five real-world graph datasets (PubMed, Cora-full, Chameleon, Crocodile, and Facebook data) in terms of link prediction problems, PULL exhibited the highest performance for performance indicators including Area Under ROC curve (AUROC) and Area Under Precision-Recall Curve (AUPRC).

Referring to FIG. 5, which shows the AUROC scores of PULL according to the repetition stage, the dotted lines indicate the number of actual edges, and it can be seen that the performance of PULL improved as the repetition stage progressed. In other words, the drawing indicates that PULL improved the quality of an expected graph as repetition progressed and ultimately made accurate predictions. As for PubMed, Cora-full and Chameleon, when the number k of sampled edges exceeded the number of actual edges, the accuracy converged or slightly decreased. This results from the smoothing problem that is caused by propagating information through a graph that has more edges than an actual graph. As for Crocodile and Facebook, prediction accuracy improved even when the number of sampled edges k was larger than the number of actual edges. This indicates that the actual graph structures of Crocodile and Facebook inherently contained missing edges.

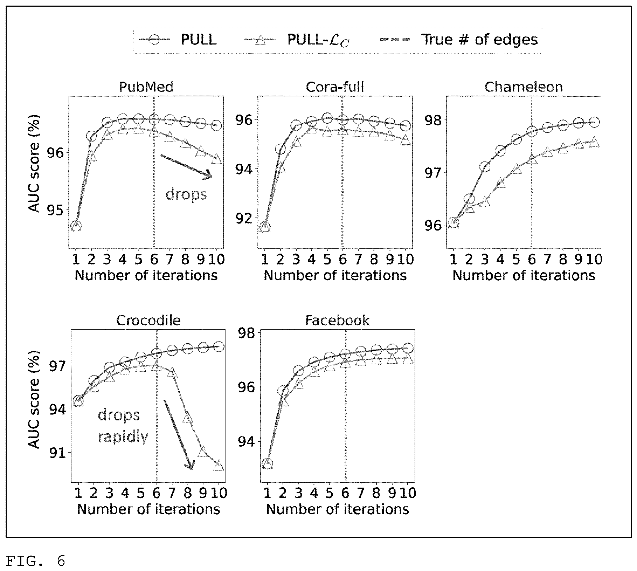

Referring to FIG. 6, which shows the effect of the correction loss function on the link prediction performance of PULL, PULL-LC denotes PULL to which the correction loss function LC is not applied, and it can be seen that PULL consistently exhibited better performance than PULL-LC. This means that the correction loss function LC effectively prevented the performance degradation of PULL when an expected graph structure contained a larger number of edges than an actual graph.

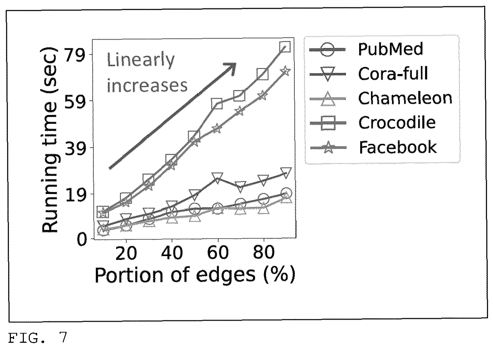

Referring to FIG. 7, which shows the processing time of PULL for sampled sub-graphs, it can be seen that the time increased linearly as the size of the sub-graph increased. This exhibits the scalability of PULL to large graphs.

The term "unit" used in the above-described embodiments means software or a hardware component such as a field-programmable gate array (FPGA) or application-specific integrated circuit (ASIC), and a "unit" performs a specific role. However, a "unit" is not limited to software or hardware. A "unit" may be configured to be present in an addressable storage medium, and also may be configured to run one or more processors. Accordingly, as an example, a "unit" includes components, such as software components, object-oriented software components, class components and task components, processes, functions, attributes, procedures, subroutines, segments in program code, drivers, firmware, microcode, circuits, data, a database, data structures, tables, arrays, and variables.

The functions provided in components and "unit(s)" may be combined into a smaller number of components and "unit(s)" or divided into a larger number of components and "unit(s)."

In addition, components and "unit(s)" may be implemented to run one or more central processing units (CPUs) in a device or secure multimedia card.

The link prediction method according to an embodiment descried through the present specification may be implemented in the form of a computer-readable medium that stores instructions and data that can be executed by a computer. In this case, the instructions and the data may be stored in the form of program code, and may generate a predetermined program module and perform a predetermined operation when executed by a processor. Furthermore, the computer-readable medium may be any type of available medium that can be accessed by a computer, and may include volatile, non-volatile, separable and non-separable media. Furthermore, the computer-readable medium may be a computer storage medium. The computer storage medium may include all volatile, non-volatile, separable and non-separable media that store information, such as computer-readable instructions, a data structure, a program module, or other data, and that are implemented using any method or technology. For example, the computer storage medium may be a magnetic storage medium such as an HDD, an SSD, or the like, an optical storage medium such as a CD, a DVD, a Blu-ray disk or the like, or memory included in a server that can be accessed over a network.

Furthermore, the link prediction method according to an embodiment descried through the present specification may be implemented as a computer program (or a computer program product) including computer-executable instructions. The computer program includes programmable machine instructions that are processed by a processor, and may be implemented as a high-level programming language, an object-oriented programming language, an assembly language, a machine language, or the like. Furthermore, the computer program may be stored in a tangible computer-readable storage medium (for example, memory, a hard disk, a magnetic/optical medium, a solid-state drive (SSD), or the like).

Accordingly, the link prediction method according to an embodiment descried through the present specification may be implemented in such a manner that the above-described computer program is executed by a computing apparatus. The computing apparatus may include at least some of a processor, memory, a storage device, a high-speed interface connected to memory and a high-speed expansion port, and a low-speed interface connected to a low-speed bus and a storage device. These individual components are connected using various buses, and may be mounted on a common motherboard or using another appropriate method.

In this case, the processor may process instructions within a computing apparatus. An example of the instructions is instructions which are stored in memory or a storage device in order to display graphic information for providing a Graphic User Interface (GUI) onto an external input/output device, such as a display connected to a high-speed interface. As another embodiment, a plurality of processors and/or a plurality of buses may be appropriately used along with a plurality of pieces of memory. Furthermore, the processor may be implemented as a chipset composed of chips including a plurality of independent analog and/or digital processors.

Furthermore, the memory stores information within the computing device. As an example, the memory may include a volatile memory unit or a set of the volatile memory units. As another example, the memory may include a non-volatile memory unit or a set of the non-volatile memory units. Furthermore, the memory may be another type of computer-readable medium, such as a magnetic or optical disk.

In addition, the storage device may provide a large storage space to the computing device. The storage device may be a computer-readable medium, or may be a configuration including such a computer-readable medium. For example, the storage device may also include devices within a storage area network (SAN) or other elements, and may be a floppy disk device, a hard disk device, an optical disk device, a tape device, flash memory, or a similar semiconductor memory device or array.

According to some of the above-described solutions, there may be proposed the link prediction method and apparatus that may classify unconnected node pairs by processing one or more edges observed in the structure of an edge-incomplete graph as positive data and processing one or more node pairs unconnected in the structure of the edge-incomplete graph as unlabeled data.

According to some of the above-described solutions, there may be proposed the link prediction method and apparatus that enable the propagation of information between unconnected node pairs by using the structure of an expected edge-incomplete graph, to which random variables are applied between unconnected node pairs in an edge-incomplete graph, in the process of training a link prediction model.

According to some of the above-described solutions, there may be proposed the link prediction method and apparatus that may efficiently compute expectations for the random variables of an expected edge-incomplete graph by converting the expected edge-incomplete graph into a line graph and assuming a Markov network.

According to some of the above-described solutions, there may be proposed the link prediction method and apparatus that may overcome the oversmoothing problem and also overcome the training time problem in which training time increases depending on the number of nodes in such a manner as to approximate the structure of an expected edge-incomplete graph.

According to some of the above-described solutions, there may be proposed the link prediction method and apparatus that may efficiently approximate an expected edge-incomplete graph in such a manner as to select candidate edges based on the degrees of nodes in the structure of the expected edge-incomplete graph, select edges having high weights based on random variables from the candidate edges, and remove the remaining edges.

According to some of the above-described solutions, there may be proposed the link prediction method and apparatus that may mutually and gradually improve the quality of a link prediction model and the quality of an expected edge-incomplete graph by repeating the process of updating the parameter of the link prediction model by using the random variables of the expected edge-incomplete graph and updating the random variables of the expected edge-incomplete graph by using a prediction probability output by the link prediction model.

According to some of the above-described solutions, there may be proposed the link prediction method and apparatus that may improve the accuracy of a link prediction model based a dual loss function in such a manner as to strike a balance between the number of connected edges and the number of unconnected edges in the structure of an edge-incomplete graph by taking into consideration newly added edges in an expected edge-incomplete graph and applying randomly sampled edges in the process of training the link prediction model.

According to some of the above-described solutions, there may be proposed the link prediction method and apparatus that may prevent excessive self-reinforcement through a correction loss function in which newly added edges in an expected edge-incomplete graph are taken into consideration and to which randomly sampled edges are applied in the process of training a link prediction model.

The advantages that can be achieved by the embodiments disclosed herein are not limited to the advantages described above, and other advantages not described above will be clearly understood by those having ordinary skill in the art, to which the embodiments disclosed herein pertain, from the foregoing description.

The above-described embodiments are intended for illustrative purposes. It will be understood that those having ordinary knowledge in the art to which the present invention pertains can easily make modifications and variations without changing the technical spirit and essential features of the present invention. Therefore, the above-described embodiments are illustrative and are not limitative in all aspects. For example, each component described as being in a single form may be practiced in a distributed form. In the same manner, components described as being in a distributed form may be practiced in an integrated form.

The scope of protection pursued through the present specification should be defined by the attached claims, rather than the detailed description. All modifications and variations which can be derived from the meanings, scopes and equivalents of the claims should be construed as falling within the scope of the present invention.

## Claims

1.   A link prediction method, the link prediction method being performed by a link prediction apparatus, the link prediction method comprising:

predicting one or more edges having a probability of being connected in a structure of an edge-incomplete graph by entering the edge-incomplete graph into a link prediction model;
wherein the link prediction model is a model that performs binary classification by processing at least one edge observed in the structure of the edge-incomplete graph as positive data and processing at least one node pair unconnected in the structure of the edge-incomplete graph as unlabeled data.

2. The method of claim 1, wherein the link prediction model is a model in which a parameter of the link prediction model is updated by using an expected edge-incomplete graph to which a random variable representing a connection state of the unconnected node pair in the structure of the edge-incomplete graph is applied.

3. The method of claim 2, wherein the link prediction model is a model in which the edge-incomplete graph is converted into a line graph in which two adjacent edges in the structure of the edge-incomplete graph are represented by two connected nodes and an expectation for the random variable is computed using a Markov network obtained by modeling a joint probability distribution of nodes of the resulting line graph.

4. The method of claim 2, wherein the link prediction model is a model in which a structure of the expected edge-incomplete graph is approximated in such a manner as to set a number of edges to be maintained within the structure of the expected edge-incomplete graph and not connect remaining node pairs except those having a higher probability of being connected than a reference value.

5. The method of claim 2, wherein the link prediction model is a model that is trained by propagating information in a graph convolutional network of the link prediction model using the expected edge-incomplete graph.

6. The method of claim 2, wherein the link prediction model is a model in which the random variable of the expected edge-incomplete graph is updated by using a prediction probability output by the link prediction model.

7. The method of claim 2, wherein the link prediction model is a model that is trained according to (i) a dual loss function to which one or more randomly sampled edges are applied in order to strike a balance between a number of connected edges and a number of unconnected edges in the structure of the edge-incomplete graph by taking into consideration one or more added edges in the expected edge-incomplete graph and (ii) a correction loss function which prevents excessive self-reinforcement based on the randomly sampled edges by taking into consideration one or more added edges in the expected edge-incomplete graph.

8. A link prediction apparatus comprising:

memory configured to store an edge-incomplete graph and a link prediction model; and
a controller configured to predict one or more edges having a probability of being connected in a structure of the edge-incomplete graph by entering the edge-incomplete graph into the link prediction model;
wherein the link prediction model is a model that performs binary classification by processing at least one edge observed in the structure of the edge-incomplete graph as positive data and processing at least one node pair unconnected in the structure of the edge-incomplete graph as unlabeled data.

100

110 — INPUT/OUTPUT INTERFACE

120 — MEMORY

130 — CONTROLLER

140 — COMMUNICATION INTERFACE

FIG. 1

FIG. 2

FIG. 3

START

S410

COLLECT EDGE-INCOMPLETE GRAPH

S420

PREDICT ONE OR MORE EDGES HAVING PROBABILITY OF BEING CONNECTED IN STRUCTURE OF EDGE-INCOMPLETE GRAPH BY ENTERING EDGE-INCOMPLETE GRAPH INTO LINK PREDICTION MODEL

END

FIG. 4

FIG. 5

FIG. 6

FIG. 7

Europäisches
Patentamt
European
Patent Office
Office européen
des brevets

# EUROPEAN SEARCH REPORT

**Application Number**

EP 24 18 6911

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GAN SHENGFENG ET AL: "Positive-Unlabeled Learning for Network Link Prediction", MATHEMATICS, vol. 10, 15 September 2022 (2022-09-15), pages 1-13, XP093223939, ISSN: 2227-7390, DOI: 10.3390/math10183345 Retrieved from the Internet: URL:https://www.mdpi.com/2227-7390/10/18/3345> * page 1 - page 5 * ----- | 1-8 | INV. G06F16/906 G06N3/08 |

**TECHNICAL FIELDS SEARCHED (IPC)**

G06F
G06N

The present search report has been drawn up for all claims

| Place of search | Date of completion of the search | Examiner |
|---|---|---|
| The Hague | 13 November 2024 | Rameseder, Jonathan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                                
& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230083925